# EUROPEAN PATENT APPLICATION

(11) **EP 4 513 941 A1**
(43) Date of publication of application: **26.02.2025**
(21) Application number: 22937732.0
(22) Date of filing: 18.04.2022
(51) Int. Cl.: H04W 24/02, H04W 72/04

(54) **WLAN SENSING MEASUREMENT METHOD AND APPARATUS, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2022/087504
(87) International publication number: WO 2023/201494

(57) **Abstract**

Embodiments of the present disclosure relate to the technical field of mobile communications, and provide a WLAN sensing measurement method and apparatus, an electronic device, and a storage medium. The WLAN sensing measurement method comprises: determining a sensing measurement setup request frame, wherein the sensing measurement setup request frame comprises first indication information, the first indication information indicates a sounding type and/or a processing order of a sensing measurement instance, and the sounding type comprises trigger frame (TF) sounding and/or null data packet announcement (NDPA) sounding; and sending the sensing measurement setup request frame during a sensing measurement setup procedure. Embodiments of the present disclosure provide a method for indicating a TB-based sounding type and/or processing order, so as to enhance a TB-based sensing measurement procedure.

## Description

### TECHNICAL FIELD

The embodiments of the present disclosure relate to the field of mobile communication technology. Specifically, the embodiments of the present disclosure relate to a WLAN sensing measurement method and apparatus, an electronic device, and a storage medium.

### BACKGROUND

With the rapid development of mobile communication technology, Wireless Fidelity (Wi-Fi) technology has made great progress in transmission rate and throughput. At present, the research content of Wi-Fi technology includes 320Mhz bandwidth transmission, aggregation and coordination of multiple frequency bands, etc. Its main application scenarios include video transmission, augmented reality (AR), virtual reality (VR), etc.

Specifically, the aggregation and coordination of multiple frequency bands means that devices can communicate with each other at 2.4GHz, 5.8GHz, 6GHz and other frequency bands at the same time. For the scenario where devices communicate with each other at multiple frequency bands at the same time, a new media access control (MAC) mechanism needs to be defined to manage it. In addition, the aggregation and coordination of multiple frequency bands is expected to support low-latency transmission.

At present, the maximum bandwidth supported by multi-band aggregation and collaboration technology is 320MHz (160MHz+160MHz). In addition, it may also support 240MHz (160MHz+80MHz) and other bandwidths supported by existing standards.

Among the Wi-Fi technologies currently under study, Wireless Local Area Network (WLAN) sensing technology may be supported. For example, application scenarios such as location discovery, proximity detection, and presence detection in dense environments (such as home environments and corporate environments). The WLAN sensing process usually includes a Triggered Based Sounding (TB) method and a Non-TB based sensing method. The TB-based method means that the AP is the Initiator or Transmitter, and the Non-TB Based method means that the STA is the Initiator or Transmitter. Specifically, in the TB-Based scenario, there may be one or both of the two sounding operating modes of trigger frame sounding (TF Sounding) and null data packet announcement sounding (NDPA Sounding). Therefore, it is necessary to provide a sounding operating mode indicating TB-Based to improve the TB-Based sensing measurement procedure.

### SUMMARY

The embodiments of the present disclosure provide a WLAN sensing measurement method and device, an electronic device, and a storage medium to indicate a TB-Based sounding operating mode.

On the one hand, an embodiment of the present disclosure provides a WLAN sensing measurement method, which is applied to a sensing initiator. The method includes:
determining a sensing measurement setup request frame; wherein the sensing measurement setup request frame includes first indication information, the first indication information indicates a sounding type and/or a processing order of a sensing measurement instance, and the sounding type includes a trigger frame sounding (TF Sounding) and/or a null data packet announcement sounding (NDPA Sounding); and
sending the sensing measurement setup request frame during a sensing measurement setup procedure.

On the other hand, an embodiment of the present disclosure further provides a WLAN sensing measurement method, which is applied to a sensing responder, and the method includes:
receiving a sensing measurement setup request frame during a sensing measurement setup procedure, wherein the sensing measurement setup request frame includes first indication information, the first indication information indicates a sounding type and/or a processing order of a sensing measurement instance, and the sounding type includes a trigger frame sounding (TF Sounding) and/or a null data packet announcement sounding (NDPA Sounding).

On the other hand, an embodiment of the present disclosure further provides a network device, wherein the network device is a sensing initiator, and the electronic device includes:
a determining module, configured to determine a sensing measurement setup request frame; wherein the sensing measurement setup request frame includes first indication information, the first indication information indicates a sounding type and/or a processing order of a sensing measurement instance, and the sounding type includes a trigger frame sounding (TF Sounding) and/or a null data packet announcement sounding (NDPA Sounding); and
a sending module, configured to send the sensing measurement setup request frame during a sensing measurement setup procedure.

On the other hand, an embodiment of the present disclosure further provides an electronic device, wherein the electronic device is a sensing responder, and the electronic device includes:
a receiving module, configured to receive a sensing measurement setup request frame during a sensing measurement setup procedure, wherein the sensing measurement setup request frame includes first indication information, the first indication information indicates a sounding type and/or a processing order of a sensing measurement instance, and the sounding type includes a trigger frame sounding (TF Sounding) and/or a null data packet announcement sounding (NDPA Sounding).

On the other hand, an embodiment of the present disclosure further provides a WLAN sensing measurement apparatus, which is applied to a sensing initiator, and the apparatus includes:
a request frame determining module, configured to determine a sensing measurement setup request frame; wherein the sensing measurement setup request frame includes first indication information, the first indication information indicates a sounding type and/or a processing order of a sensing measurement instance, and the sounding type includes a trigger frame sounding (TF Sounding) and/or a null data packet announcement sounding (NDPA Sounding); and
a request frame sending module, configured to send the sensing measurement setup request frame during a sensing measurement setup procedure.

On the other hand, an embodiment of the present disclosure further provides a WLAN sensing measurement apparatus, which is applied to a sensing responder, and the apparatus includes:
a request frame receiving module, configured to receive a sensing measurement setup request frame during a sensing measurement setup procedure, wherein the sensing measurement setup request frame includes first indication information, the first indication information indicates a sounding type and/or a processing order of a sensing measurement instance, and the sounding type includes a trigger frame sounding (TF Sounding) and/or a null data packet announcement sounding (NDPA Sounding).

The embodiments of the present disclosure further provide an electronic device, including a memory, a processor, and a computer program stored in the memory and executable on the processor, wherein when the program is executed by the processor, one or more methods described in the embodiments of the present disclosure are implemented.

The embodiments of the present disclosure further provide a computer-readable storage medium, on which a computer program is stored. When the computer program is executed by a processor, one or more of the methods described in the embodiments of the present disclosure are implemented.

In an embodiment of the present disclosure, a sensing measurement setup request frame is determined; wherein the sensing measurement setup request frame includes first indication information, and the first indication information indicates a sounding type and/or processing order of a sensing measurement instance; an embodiment of the present disclosure provides a method for indicating a TB-Based sounding type and/or processing order to improve the TB-Based sensing measurement procedure.

Additional aspects and advantages of the embodiments of the present disclosure will be partially given in the description below, which will become apparent from the description below, or will be learned through the practice of the present disclosure.

### BRIEF DESCRIPTION OF THE DRAWINGS

In order to more clearly illustrate the technical solutions of the embodiments of the present disclosure, the drawings required for use in the description of the embodiments of the present disclosure will be briefly introduced below. Obviously, the drawings in the following description are only some embodiments of the present disclosure. For ordinary technicians in this field, other drawings can be obtained based on these drawings without creative effort.
FIG. 1 is a first flowchart of a WLAN sensing measurement method provided by an embodiment of the present disclosure;
FIG. 2 is a first schematic diagram of a first example of an embodiment of the present disclosure;
FIG. 3 is a second schematic diagram of the first example of an embodiment of the present disclosure;
FIG. 4 is a third schematic diagram of the first example of an embodiment of the present disclosure;
FIG. 5 is a schematic diagram of a second example of an embodiment of the present disclosure;
FIG. 6 is a schematic diagram of a third example of an embodiment of the present disclosure;
FIG. 7 is a second flowchart of a WLAN sensing measurement method provided by an embodiment of the present disclosure;
FIG. 8 is a third flowchart of a WLAN sensing measurement method provided by an embodiment of the present disclosure;
FIG. 9 is a fourth flowchart of a WLAN sensing measurement method provided by an embodiment of the present disclosure;
FIG. 10 is a schematic diagram of the structure of a network device provided in an embodiment of the present disclosure;
FIG. 11 is a first schematic diagram of the structure of an electronic device provided in an embodiment of the present disclosure; and
FIG. 12 is a second schematic diagram of the structure of an electronic device provided in an embodiment of the present disclosure.

### DETAILED DESCRIPTION

In the embodiments of the present disclosure, the term "and/or" describes the association relationship of associated objects, indicating that three relationships may exist. For example, A and/or B may represent three situations: A exists alone, A and B exist at the same time, and B exists alone. The character "/" generally indicates that the associated objects before and after are in an "or" relationship.

The term "plurality" in the embodiments of the present disclosure refers to two or more than two, and other quantifiers are similar thereto.

Exemplary embodiments will be described in detail herein, examples of which are shown in the accompanying drawings. Unless otherwise indicated, when the following description refers to the drawings, the same numbers in different drawings represent the same or similar elements. The embodiments described in the following exemplary embodiments do not represent all embodiments consistent with the present invention. Instead, they are merely examples of devices and methods consistent with some aspects of the present invention as detailed in the appended claims.

The terms used in this disclosure are for the purpose of describing specific embodiments only and are not intended to limit the disclosure. The singular forms "a", "said" and "the" used in this disclosure and the appended claims are also intended to include plural forms unless the context clearly indicates otherwise. It should also be understood that the term "and/or" used herein refers to and includes any or all possible combinations of one or more associated listed items.

It should be understood that although the terms first, second, third, etc. may be used in the present disclosure to describe various information, such information should not be limited to these terms. These terms are only used to distinguish the same type of information from each other. For example, without departing from the scope of the present disclosure, the first information may also be referred to as the second information, and similarly, the second information may also be referred to as the first information. Depending on the context, for example, the word "if" used herein may be interpreted as "at the time of" or "when" or "in response to determining".

Hereinafter, the technical solutions in the embodiments of the present disclosure will be clearly and completely described with reference to the drawings in the embodiment of the present disclosure. Obviously, the described embodiments are only part of the embodiments of the present disclosure, not all of the embodiments. Based on the embodiments in the present disclosure, all other embodiments obtained by ordinary technicians in this field without making creative effort are within the scope of protection of the present disclosure.

The embodiments of the present disclosure provide a WLAN sensing measurement method and apparatus, an electronic device, and a storage medium, which are used to indicate a TB-Based sounding operating mode.

In the embodiments, the method and the device are based on the same application concept. Since the method and the device solve the problem in a similar principle, the implementation of the device and the method can refer to each other, and the repeated parts will not be repeated.

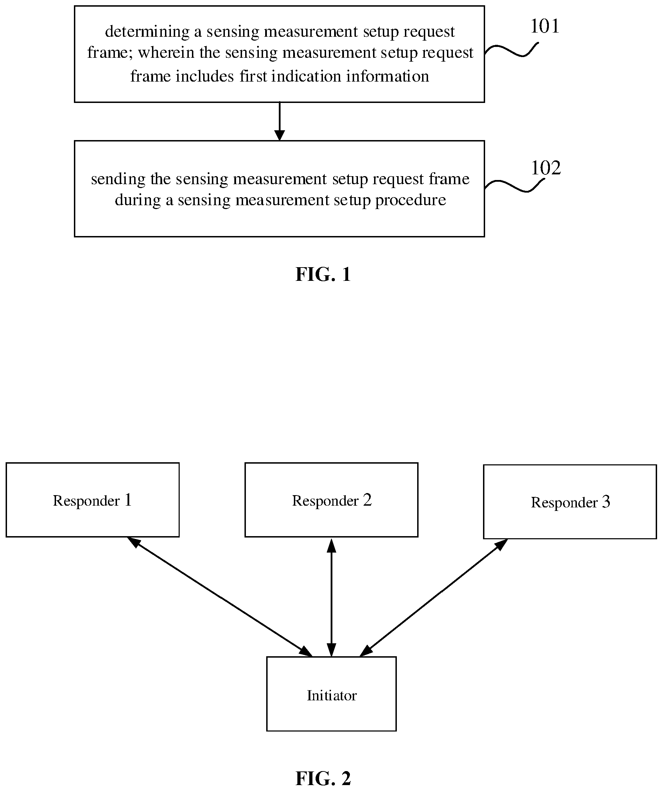

As shown in FIG. 1, an embodiment of the present disclosure provides a WLAN sensing measurement method. Optionally, the method may be applied to a network device, and the network device may be a sensing initiator. The method may include the following steps:

Step 101, determining a sensing measurement setup request frame; wherein the sensing measurement setup request frame includes first indication information, the first indication information indicates a sounding type and/or a processing order of a sensing measurement instance, and the sounding type includes a trigger frame sounding (TF Sounding) and/or a null data packet announcement sounding (NDPA Sounding).

As a first example, referring to FIG. 2 to FIG. 4, the WLAN Sensing architecture and the WLAN Sensing process applied to the WLAN sensing measurement method provided in the embodiments of the present disclosure are first introduced.

FIG. 2 shows a schematic diagram of the architecture of a WLAN Sensing (process); wherein, a sensing initiator (or initiator) initiates WLAN Sensing (for example, initiates a WLAN sensing session), and there may be multiple sensing responders (or sensing receivers) or responders responding to it, as shown in FIG. 2 as responder 1, responder 2, and responder 3. When the sensing initiator initiates WLAN Sensing, multiple associated or unassociated sensing responders of WLAN Sensing may respond.

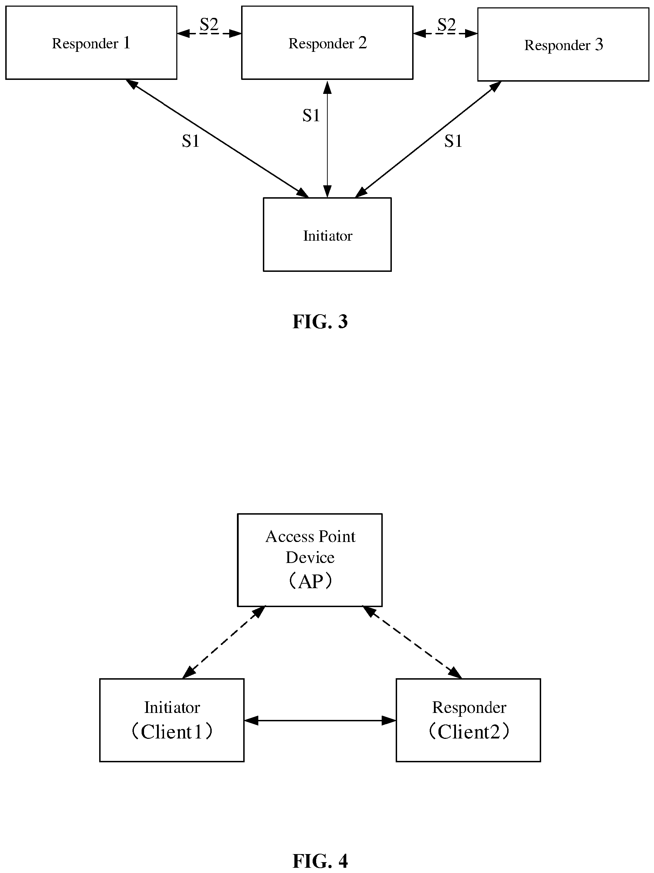

Referring to FIG. 3, the sensing initiator communicates with the sensing responder via a communication connection, as shown in communication connection S1; the sensing responders communicate with each other via communication connection S2.

In the embodiment, each sensing initiator can be a client; each sensing responder (in this example, sensing responder 1 to sensing responder 3) can be a station device (STA) or an access point device (AP). In addition, STA and AP can play multiple roles in the WLAN sensing process; for example, in the WLAN sensing process, STA can also serve as a sensing initiator, and the sensing initiator can be a sensing transmitter, a sensing receiver, or both, or neither. In the WLAN sensing process, the sensing responder can also be a sensing transmitter, a sensing receiver, or both.

As another architecture, as shown in FIG. 4, the sensing initiator and the sensing responder can both be clients, and the two can communicate by connecting to the same access point device (AP); in FIG. 4, Client 1 is the sensing initiator, and Client 2 is the sensing responder.

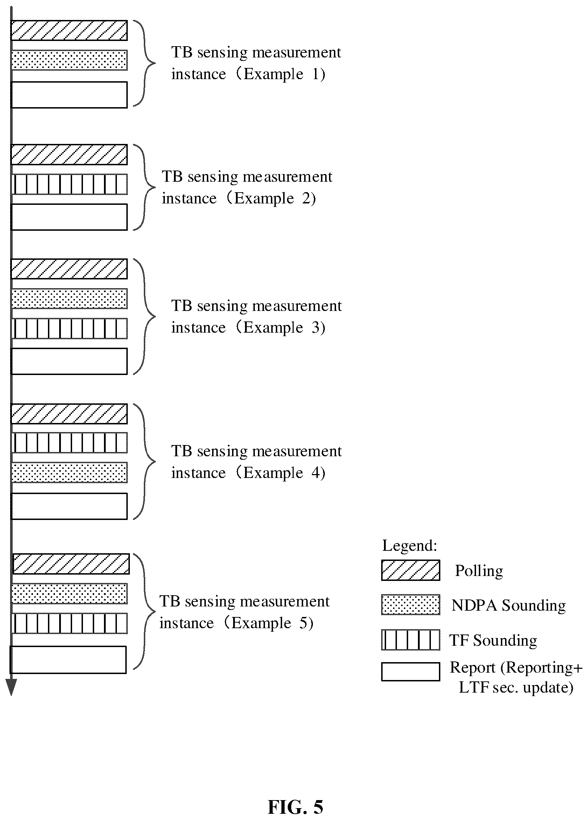

As a second example, referring to FIG. 5, multiple sensing measurement instance (Measurement Instance) of a TB-Based sensing measurement procedure are shown; wherein, in Examples 1 to 5, the sensing measurement procedure includes polling, sounding, and reporting (Reporting + LTF sec. update) processes; wherein, in each example, sounding may include only NDPA sounding or TF Sounding; it may also include both at the same time.

Therefore, before the WLAN sensing measurement is setup, the sensing initiator determines a sensing measurement setup request frame, and carries first indication information in the sensing measurement setup request frame, and indicates the sounding type and/or processing order of the sensing measurement instance through the first indication information, wherein the sensing measurement instance is, for example, an uplink sensing measurement instance, and the sounding type includes trigger frame sounding (TF Sounding) and/or null data packet announcement sounding (NDPA Sounding); for example, the sounding type may also include only one of TF Sounding and NDPA Sounding, such as only NDPA Sounding in Example 1, and only TF Sounding in Example 2. In the case where the sounding type includes TF Sounding and NDPA Sounding, the first indication information may also indicate the processing order of the two; as in Example 3 and Example 4 in FIG. 5, in Example 3, NDPA Sounding is processed before TF Sounding, and in Example 4, NDPA Sounding is processed before TF Sounding.

Step 102, sending the sensing measurement setup request frame during a sensing measurement setup procedure.

After determining the sensing measurement setup request frame, the sensing initiator sends the sensing measurement setup request frame to the sensing responder during the sensing measurement setup procedure to request the setup of the sensing measurement, and at the same time indicates the sounding type and/or processing order included in this sensing measurement procedure.

In an optional embodiment, the sensing measurement setup request frame includes a sensing measurement parameters element;

The first indication information is carried in the sensing measurement parameters element.

Referring to Table 1, the format of the sensing measurement parameters element is as shown in Table 1 below, including an original identification field, a length field, an element extension identification field, and a sensing measurement parameters element field; wherein the first indication information is carried in the sensing measurement parameters element field;

**Table 1**

| Information content | Element ID | Length | Element ID Extension | Sensing Measurement Parameter | TBD |
|---|---|---|---|---|---|
| bites (Octets) | 1 | 1 | 1 | TBD (to be determined) | TBD |

Furthermore, the format of the sensing measurement parameters element field is shown in Table 2 below, including a type subfield, a reserved subfield, a measurement report subfield, etc.:

**Table 2:**

| Content | Type | Reserved | Measurement Report Type | TBD |
|---|---|---|---|---|
| Bits | 1 | 1 | | TBD |

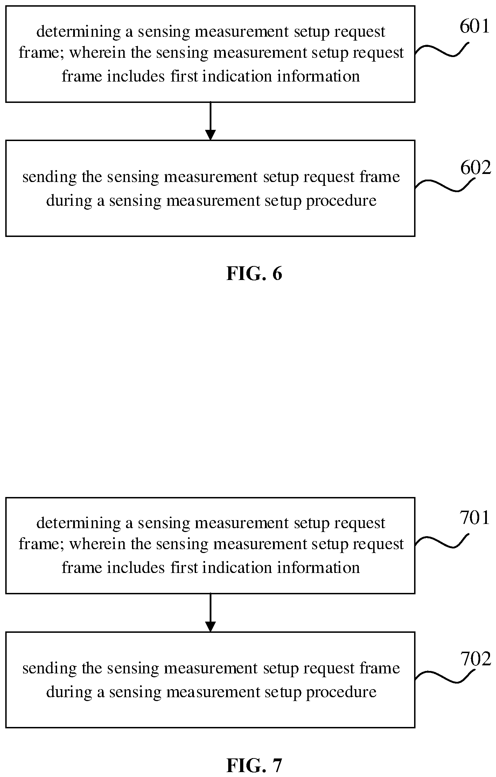

Referring to FIG. 6, an embodiment of the present disclosure further provides a WLAN sensing measurement method. Optionally, the method may be applied to a network device, and the network device may be a sensing initiator. The method may include the following steps:
Step 601: determining a sensing measurement setup request frame; wherein the sensing measurement setup request frame includes first indication information, the first indication information indicates a sounding type of a sensing measurement instance, and the sounding type includes a trigger frame sounding (TF Sounding) and/or a null data packet announcement sounding (NDPA Sounding).
The first indication information includes identity information;
Wherein, in the case where the identity information includes a sensing transmitter, the sounding type includes the NDPA Sounding;
   and/or

In the case where the identity information includes a sensing receiver, the sounding type includes the TF Sounding.

In the embodiment, the WLAN Sensing architecture and WLAN Sensing process applied in the WLAN sensing measurement method provided in the embodiment of the present disclosure refer to the aforementioned first example, and the TB-Based sensing measurement procedure refers to the aforementioned second example, which will not be repeated here.

In the TB-Based sensing measurement procedure, the sounding type includes TF Sounding and/or NDPA Sounding; therefore, before the WLAN sensing measurement is setup, the sensing initiator determines a sensing measurement setup request frame, and carries first indication information in the sensing measurement setup request frame, and indicates the sounding type of the sensing measurement instance through the first indication information, the sensing measurement instance is, for example, an uplink sensing measurement instance.

Specifically, the first indication information includes identity information; in a case where the identity information includes the sensing transmitter (Transmitter), for example, a Transmitter bit is set in the first indication information, if the Transmitter bit is set to 1, the identity information of the sensing initiator is identified as the Transmitter, and the sounding type includes the NDPA Sounding. In the case where the identity information includes the sensing receiver (Receiver), for example, a Receiver bit is set in the first indication information, if the Receiver bit is set to 1, the identity information of the sensing initiator is identified as the Receiver, and the sounding type includes the TF Sounding.

In addition, the sounding type may include only one of TF Sounding and NDPA Sounding, for example, Example 1 includes only NDPA Sounding, and Example 2 includes only TF Sounding, and the Transmitter bit or the Receiver bit is set to 1 respectively. In the case where the sounding type includes TF Sounding and NDPA Sounding, the Transmitter bit or the Receiver bit is set to 1 at the same time.

Step 602: sending the sensing measurement setup request frame during a sensing measurement setup procedure.

After determining the sensing measurement setup request frame, the sensing initiator sends the sensing measurement setup request frame to the sensing responder during the sensing measurement setup procedure to request to setup the sensing measurement, and at the same time indicates the sounding type included in this sensing measurement procedure.

Referring to FIG. 7, an embodiment of the present disclosure further provides a WLAN sensing measurement method. Optionally, the method may be applied to a network device, and the network device may be a sensing initiator. The method may include the following steps:
Step 701, determining a sensing measurement setup request frame; wherein the sensing measurement setup request frame includes first indication information, the first indication information indicates a processing order of sensing measurement instances, and the sensing measurement instances include trigger frame sounding (TF Sounding) and null data packet announcement sounding (NDPA Sounding);
If the first indication information is a first parameter value, the processing order of the NDPA Sounding is prior to the processing order of the TF Sounding;
If the first indication information is the second parameter value, the processing order of the TF Sounding is prior to the processing order of the NDPA Sounding.

In the embodiment, the WLAN Sensing architecture and WLAN Sensing process applied in the WLAN sensing measurement method provided in the embodiment of the present disclosure refer to the aforementioned first example, and the TB-Based sensing measurement procedure refers to the aforementioned second example, which will not be repeated here.

During the TB-Based sensing measurement procedure, when the sounding type includes TF Sounding and NDPA Sounding, the first indication information indicates the processing order of the two; for example, in the parameter field of the sensing measurement setup request frame, for example, in the sensing measurement parameter field, a bit is added to identify the order of NDPA sounding and TF sounding, that is, the first indication information; the bit is set to "1", indicating that NDPA sounding occurs first and then TF sounding occurs, such as Example 3 in FIG. 5, where NDPA Sounding is processed before TF Sounding.

This bit is set to "0", indicating that TF sounding occurs first and then NDPA sounding occurs; for example, in Example 4, NDPA sounding is performed before TF sounding.

Step 702: sending the sensing measurement setup request frame during a sensing measurement setup procedure.

After determining the sensing measurement setup request frame, the sensing initiator sends the sensing measurement setup request frame to the sensing responder during the sensing measurement setup procedure to request the setup of the sensing measurement, and at the same time indicates the processing order included in this sensing measurement procedure.

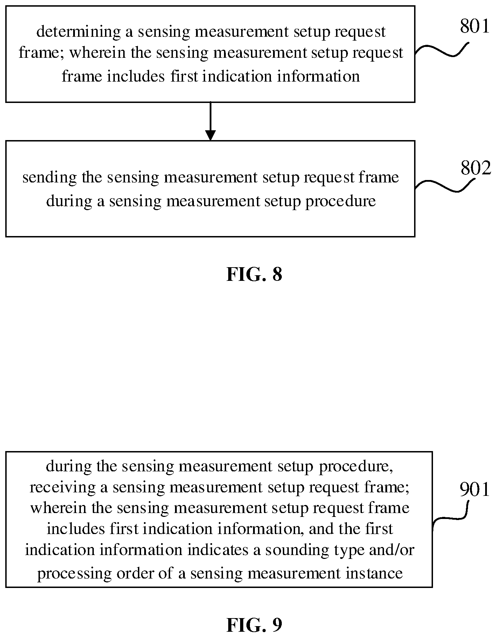

Referring to FIG. 8, an embodiment of the present disclosure further provides a WLAN sensing measurement method. Optionally, the method may be applied to a network device, and the network device may be a sensing initiator. The method may include the following steps:
Step 801, determining a sensing measurement setup request frame; wherein the sensing measurement setup request frame includes first indication information, the first indication information indicates a sounding type and/or processing order of a sensing measurement instance, and the sounding type includes trigger frame sounding (TF Sounding) and/or null data packet announcement sounding (NDPA Sounding).
In the case where the first indication information indicates the sounding type,
If the first indication information is a third parameter value, the sounding type includes the TF Sounding and the NDPA Sounding;
If the first indication information is a fourth parameter value, the sounding type includes the TF Sounding or the NDPA Sounding.

In the embodiment, the WLAN Sensing architecture and WLAN Sensing process applied in the WLAN sensing measurement method provided in the embodiment of the present disclosure refer to the aforementioned first example, and the TB-Based sensing measurement procedure refers to the aforementioned second example, which will not be repeated here.

During the TB- Based sensing measurement procedure, for example, in the uplink sensing measurement instance, there may be a sensing measurement procedure mapped by the Measurement setup ID including TF sounding and NDPA sounding, or there may be a sensing measurement procedure mapped by the Measurement setup ID including only one of TF sounding or NDPA sounding. Therefore, the first indication information is required to identify that the WLAN sensing measurement setup request frame initiated by the sensing initiator includes one or both of TF sounding and NDPA sounding. For example, setting it to "1" indicates that both are included, such as Example 3 and Example 4 in FIG. 5; and setting it to "0" indicates that one of the two is included, such as Example 1 in FIG. 5 only includes NDPA sounding, and Example 2 only includes TF sounding.

Step 802: sending the sensing measurement setup request frame during a sensing measurement setup procedure.

After determining the sensing measurement setup request frame, the sensing initiator sends the sensing measurement setup request frame to the sensing responder during the sensing measurement setup procedure to request to setup the sensing measurement, and at the same time indicates the sounding type included in this sensing measurement procedure.

In an optional embodiment, the first indication information is carried in the dialog token field of the sensing measurement setup request frame. See Table 3, the format of the sensing measurement setup request frame is shown in Table 3 below, including a category field, a common action field, a dialog token field, a sensing measurement setup identifier field, and a sensing measurement parameters element field. The first indication information can be carried in the dialog token field.

**Table 3:**

| Information Content | Category | Public Action | Dialog Token | Sensing measurement setup ID | Sensing Measurement Parameters Element |
|---|---|---|---|---|---|
| Octets | 1 | 1 | 1 | TBD | TBD |

In the embodiment of the present disclosure, a sensing measurement setup request frame is determined; wherein the sensing measurement setup request frame includes first indication information, and the first indication information indicates the sounding type and/or processing order of the sensing measurement instance; in an embodiment of the present disclosure, a method for indicating the TB-Based sounding type and/or processing order is provided to improve the TB- Based sensing measurement procedure.

Referring to FIG. 9, an embodiment of the present disclosure provides a WLAN sensing measurement method. Optionally, the method may be applied to an electronic device, and the electronic device may be a sensing responder. The method may include the following steps:
Step 901: during the sensing measurement setup procedure, receiving a sensing measurement setup request frame; wherein the sensing measurement setup request frame includes first indication information, and the first indication information indicates a sounding type and/or processing order of a sensing measurement instance, and the sounding type includes trigger frame sounding (TF Sounding) and/or null data packet announcement sounding (NDPA Sounding).

In the embodiment, the WLAN Sensing architecture and WLAN Sensing process applied in the WLAN sensing measurement method provided in the embodiment of the present disclosure refer to the aforementioned first example, and the TB-Based sensing measurement procedure refers to the aforementioned second example, which will not be repeated here.

Before the WLAN sensing measurement is setup, during the sensing measurement setup procedure at the sensing responder, a sensing measurement setup request frame is received, the sensing measurement setup request frame includes first indication information, the first indication information indicating a sounding type and/or processing order of a sensing measurement instance; the sensing measurement instance is, for example, an uplink sensing measurement instance, the sounding type includes trigger frame sounding (TF Sounding) and/or null data packet announcement sounding (NDPA Sounding); for example, the sounding type may also include only one of TF Sounding and NDPA Sounding, for example, only NDPA Sounding is included in Example 1, and only TF Sounding is included in Example 2. In the case where the sounding type includes TF Sounding and NDPA Sounding, the first indication information may also indicate the processing order of the two; such as in Example 3 and Example 4 in FIG5, in Example 3, NDPA Sounding is processed before TF Sounding, and in Example 4, NDPA Sounding is processed before TF Sounding.

In an optional embodiment, when the first indication information indicates the sounding type and the processing order, and the sounding type includes the TF Sounding and the NDPA Sounding;

After receiving the sensing measurement setup request frame, the method further includes:
determining a target sounding type in which the sensing responder participates;

determining a processing order of the target sounding types.

When the sensing responder only participates in NDPA sounding or TF sounding, that is, the involved target sounding type, it is only necessary to detect the processing order of the involved NDPA sounding or the TF sounding; and participate in the sounding process of the target sounding type according to the processing order of the target sounding type.

In the embodiment of the present disclosure, during the sensing measurement setup procedure, the sensing measurement setup request frame is received; the sensing measurement setup request frame includes first indication information, and the first indication information indicates the sounding type and/or processing order of the sensing measurement instance; in the embodiment of the present disclosure, the method for indicating the TB-Based sounding type and/or processing order is provided to improve the TB- Based sensing measurement procedure.

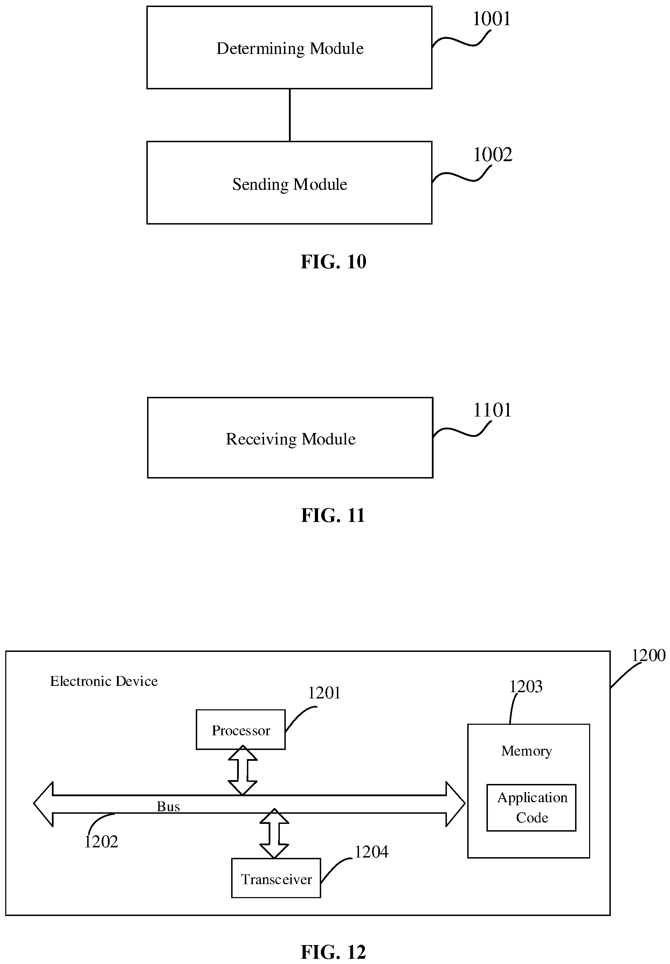

Referring to FIG. 10, based on like principle as the method provided in the embodiment of the present disclosure, the embodiment of the present disclosure further provides a network device, the network device is a sensing initiator, and the network device includes:
a determining module 1001, configured to determine a sensing measurement setup request frame, wherein the sensing measurement setup request frame includes first indication information, the first indication information indicates a sounding type and/or a processing order of a sensing measurement instance, and the sounding type includes trigger frame sounding (TF Sounding) and/or null data packet announcement sounding (NDPA Sounding); and
a sending module 1002, configured to send the sensing measurement setup request frame during the sensing measurement setup procedure.

In an optional embodiment, the first indication information includes identity information;
in the case where the identity information includes a sensing transmitter, the sounding type includes the NDPA Sounding;
and/or
in a case where the identity information includes a sensing receiver, the sounding type includes the TF Sounding.

In an optional embodiment, when the first indication information indicates the processing order,
in a case where the first indication information is a first parameter value, the processing order of the NDPA Sounding is prior to the processing order of the TF Sounding; and
in a case where the first indication information is the second parameter value, the processing order of the TF Sounding is prior to the processing order of the NDPA Sounding.

In an optional embodiment, when the first indication information indicates the sounding type,
in a case where the first indication information is a third parameter value, the sounding type includes the TF Sounding and the NDPA Sounding; and
in a case where the first indication information is a fourth parameter value, the sounding type includes the TF Sounding or the NDPA Sounding.

In an optional embodiment, the first indication information is carried in a dialog token field of the sensing measurement setup request frame.

In an optional embodiment, the sensing measurement setup request frame includes a sensing measurement parameters element; and
the first indication information is carried in the sensing measurement parameters element.

In the embodiment of the present disclosure, the determination module 1001 determines a sensing measurement setup request frame; and the sending module 1002 sends the sensing measurement setup request frame during the sensing measurement setup procedure; the sensing measurement setup request frame includes first indication information, and the first indication information indicates the sounding type and/or processing order of the sensing measurement instance; the embodiment of the present disclosure provides a means for indicating TB-Based sounding type and/or processing order to improve the TB-Based sensing measurement procedure.

The embodiment of the present disclosure also provides a WLAN sensing measurement apparatus, which is applied to a sensing initiator. The apparatus includes:
a request frame determining module, configured to determine a sensing measurement setup request frame; wherein the sensing measurement setup request frame includes first indication information, the first indication information indicates a sounding type and/or a processing order of the sensing measurement instance, the sounding type includes trigger frame sounding (TF Sounding) and/or null data packet announcement sounding (NDPA Sounding); and
a request frame sending module, configured to send the sensing measurement setup request frame during the sensing measurement setup procedure.

The apparatus also includes other modules of the network device in the aforementioned embodiment, which will not be described in detail here.

Referring to FIG. 11, based on like principle as the method provided in the embodiment of the present disclosure, the embodiment of the present disclosure further provides an electronic device as a sensing responder, the electronic device including:
a receiving module 1101, configured to receive a sensing measurement setup request frame during the sensing measurement setup procedure; wherein the sensing measurement setup request frame includes first indication information, and the first indication information indicates a sounding type and/or processing order of the sensing measurement instance, and the sounding type includes trigger frame sounding (TF Sounding) and/or null data packet announcement sounding (NDPA Sounding).

In an optional embodiment, when the first indication information indicates the sounding type and the processing order, and the sounding type includes the TF Sounding and the NDPA Sounding;
after receiving the sensing measurement setup request frame, the electronic device further includes:
a type determination module, configured to determine the target sounding type in which the sensing responder participates; and
an order determination module, configured to determine the processing order of the target sounding type.

In the embodiment of the present disclosure, the receiving module 1101 receives a sensing measurement setup request frame during the sensing measurement setup procedure; the sensing measurement setup request frame includes first indication information, and the first indication information indicates the sounding type and/or processing order of the sensing measurement instance; in an embodiment of the present disclosure, a means for indicating the TB-Based sounding type and/or processing order is provided to improve the TB- Based sensing measurement procedure.

The embodiment of the present disclosure also provides a WLAN sensing measurement apparatus, which is applied to a sensing responder. The apparatus includes:
a request frame receiving module, configured to receive a sensing measurement setup request frame during a sensing measurement setup procedure; wherein the sensing measurement setup request frame includes first indication information, and the first indication information indicates a sounding type and/or a processing order of a sensing measurement instance, and the sounding type includes trigger frame sounding (TF Sounding) and/or null data packet announcement sounding (NDPA Sounding).

The apparatus also includes other modules of the electronic device in the aforementioned embodiment, which will not be described in detail here.

In an optional embodiment, the embodiment of the present disclosure further provides an electronic device, as shown in FIG. 12, the electronic device 1200 shown in FIG. 12 may be a server, including: a processor 1201 and a memory 1203. The processor 1201 and the memory 1203 are connected, e.g., through a bus 1202. Optionally, the electronic device 1200 may further include a transceiver 1204. It should be noted that in actual applications, the transceiver 1204 is not limited to one, and the structure of the electronic device 1200 does not constitute a limitation on the embodiment of the present disclosure.

The processor 1201 may be a CPU (Central Processing Unit), a general-purpose processor, a DSP (Digital Signal Processor), an ASIC (Application Specific Integrated Circuit), an FPGA (Field Programmable Gate Array) or other programmable logic devices, transistor logic devices, hardware components or any combination thereof. It may implement or execute various exemplary logic blocks, modules and circuits described in conjunction with the disclosure of the present invention. The processor 1201 may also be a combination that implements computing functions, such as a combination of one or more microprocessors, a combination of a DSP and a microprocessor, or the like.

The bus 1202 may include a path for transmitting information between the above components. The bus 1202 may be a PCI (Peripheral Component Interconnect) bus or an EISA (Extended Industry Standard Architecture) bus, or the like. The bus 1202 may be divided into an address bus, a data bus, a control bus, and the like. For ease of representation, FIG. 12 only uses one thick line, but does not mean that there is only one bus or one type of bus.

The memory 1203 may be a ROM (Read Only Memory) or other types of static storage devices that can store static information and instructions, a RAM (Random Access Memory) or other types of dynamic storage devices that can store information and instructions, or an EEPROM (Electrically Erasable Programmable Read Only Memory), a CD-ROM (Compact Disc Read Only Memory) or other optical disk storage, optical disk storage (including compressed optical disk, laser disk, optical disk, digital versatile disk, Blu-ray disk, or the like), a magnetic disk storage medium or other magnetic storage device, or any other medium that can be used to carry or store the desired program code in the form of instructions or data structures and can be accessed by a computer, but is not limited thereto.

The memory 1203 is used to store application code for executing the solution of the present disclosure, and the execution is controlled by the processor 1201. The processor 1201 is used to execute the application code stored in the memory 1203 to implement the content shown in the above method embodiment.

The electronic devices include, but are not limited to, mobile phones, laptop computers, digital broadcast receivers, PDAs (personal digital assistants), PADs (tablet computers), PMPs (portable multimedia players), vehicle-mounted terminals (such as vehicle-mounted navigation terminals), or the like, and fixed terminals such as digital TVs, desktop computers, etc. The electronic device shown in FIG. 12 is only an example and should not impose any limitation on the functions and scope of application of the embodiments of the present disclosure.

The server provided by the present disclosure may be an independent physical server, or a server cluster or distributed system including multiple physical servers, or a cloud server that provides basic cloud computing services such as cloud services, cloud databases, cloud computing, cloud functions, cloud storage, network services, cloud communications, middleware services, domain name services, security services, CDN, and big data and artificial intelligence platforms. The terminal may be a smart phone, tablet computer, laptop computer, desktop computer, smart speaker, smart watch, or the like, but is not limited thereto. The terminal and the server may be directly or indirectly connected via wired or wireless communication, which is not limited by the present disclosure.

An embodiment of the present disclosure provides a computer-readable storage medium, on which a computer program is stored. When the computer-readable storage medium is run on a computer, the computer can execute the corresponding contents of the aforementioned method embodiment.

It should be understood that, although the steps in the flowchart of the accompanying drawings are displayed in sequence as indicated by the arrows, these steps are not necessarily executed in sequence in the order indicated by the arrows. Unless otherwise specified herein, there is no strict order restriction on the execution of these steps, and they can be executed in other orders. Moreover, at least a part of the steps in the flowchart of the accompanying drawings may include multiple sub-steps or multiple stages, and these sub-steps or stages are not necessarily executed at the same time, but can be executed at different times, and their execution order is not necessarily sequential, but can be executed in turn or alternately with other steps or at least a part of the sub-steps or stages of other steps.

It should be noted that the computer-readable medium mentioned above in the present disclosure may be a computer-readable signal medium or a computer-readable storage medium or any combination of the above two. The computer-readable storage medium may be, for example, but not limited to, an electrical, magnetic, optical, electromagnetic, infrared, or semiconductor system, apparatus or device, or any combination of the above. More specific examples of computer-readable storage media may include, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium containing or storing a program that can be used by or in combination with an instruction execution system, apparatus or device. In the present disclosure, a computer-readable signal medium may include a data signal propagated in a baseband or as part of a carrier wave, which carries a computer-readable program code. This propagated data signal may take a variety of forms, including but not limited to electromagnetic signals, optical signals, or any suitable combination of the above. The computer readable signal media may also be any computer readable medium other than computer readable storage media, which may send, propagate or transmit a program for use by or in conjunction with an instruction execution system, apparatus or device. The program code contained on the computer readable medium may be transmitted using any appropriate medium, including but not limited to: wires, optical cables, RF (radio frequency), etc., or any suitable combination of the above.

The computer-readable medium may be included in the electronic device, or may exist independently without being installed in the electronic device.

The computer-readable medium carries one or more programs. When the one or more programs are executed by the electronic device, the electronic device executes the method shown in the above embodiment.

According to one aspect of the present disclosure, a computer program product or a computer program is provided, the computer program product or the computer program comprising computer instructions, the computer instructions being stored in a computer-readable storage medium. A processor of a computer device reads the computer instructions from the computer-readable storage medium, and the processor executes the computer instructions, so that the computer device executes the methods provided in the above-mentioned various optional implementations.

The computer program code for carrying out operations of the embodiment of the present disclosure may be written in one or more programming languages or a combination thereof, including object-oriented programming languages such as Java, Smalltalk, C++, and conventional procedural programming languages such as "C" or similar programming languages. The program code may be executed entirely on the user's computer, partially on the user's computer, as a separate software package, partially on the user's computer and partially on a remote computer, or entirely on a remote computer or server. In cases involving a remote computer, the remote computer may be connected to the user's computer through any type of network, including a local area network (LAN) or a wide area network (WAN), or may be connected to an external computer (e.g., via the Internet using an Internet service provider).

The flow chart and block diagram in the accompanying drawings illustrate the possible architecture, function and operation of the system, method and computer program product according to various embodiments of the present disclosure. In this regard, each block in the flow chart or block diagram can represent a module, a program segment or a part of a code, and the module, the program segment or a part of the code contains one or more executable instructions for realizing the specified logical function. It should also be noted that in some implementations as alternatives, the functions marked in the block can also occur in a sequence different from that marked in the accompanying drawings. For example, two blocks represented in succession can actually be executed substantially in parallel, and they can sometimes be executed in the opposite order, depending on the functions involved. It should also be noted that each block in the block diagram and/or flow chart, and the combination of the blocks in the block diagram and/or flow chart can be implemented with a dedicated hardware-based system that performs a specified function or operation, or can be implemented with a combination of dedicated hardware and computer instructions.

The involved modules described in the embodiment of the present disclosure may be implemented by software or hardware. The name of a module does not limit the module itself in some cases. For example, module A may also be described as "module A for performing operation B".

The above description is only a preferred embodiment of the present disclosure and an explanation of the technical principles used. Those skilled in the art should understand that the scope of disclosure involved in the present disclosure is not limited to the technical solutions formed by a specific combination of the above technical features, but should also cover other technical solutions formed by any combination of the above technical features or their equivalent features without departing from the above disclosed concept. For example, a technical solution formed by replacing the above features with technical features with similar functions disclosed in this disclosure (but not limited to).

## Claims

1. A WLAN sensing measurement method, applied to a sensing initiator, wherein the method comprises:
determining a sensing measurement setup request frame; wherein the sensing measurement setup request frame comprises first indication information, the first indication information comprises a sounding type and/or a processing order of a sensing measurement instance, the sounding type comprises a trigger frame sounding (TF Sounding) and/or a null data packet announcement sounding (NDPA Sounding); and
sending the sensing measurement setup request frame during a sensing measurement setup procedure.

2. The WLAN sensing measurement method according to claim 1, wherein the first indication information comprises identity information;
in a case where the identity information comprises a sensing transmitter (Transmitter), the sounding type comprises the NDPA Sounding;
and/or
in a case where the identity information comprises a sensing receiver (Receiver), the sounding type comprises the TF Sounding.

3. The WLAN sensing measurement method according to claim 1, wherein in a case where the first indication information indicates the processing order,
in response to the first indication information being a first parameter value, a processing order of the NDPA Sounding precedes a processing order of the TF Sounding; and
in response to the first indication information being a second parameter value, the processing order of the TF Sounding precedes the processing order of the NDPA Sounding.

4. The WLAN sensing measurement method according to claim 1, wherein in a case where the first indication information indicates the sounding type,
in response to the first indication information being a third parameter value, the sounding type comprises the TF Sounding and the NDPA Sounding; and
in response to the first indication information being a fourth parameter value, the sounding type comprises the TF Sounding or the NDPA Sounding.

5. The WLAN sensing measurement method according to claim 4, wherein the first indication information is carried in a dialog token field of the sensing measurement setup request frame.

6. The WLAN sensing measurement method according to claim 1, wherein the sensing measurement setup request frame comprises a sensing measurement parameters element; and
the first indication information is carried in the sensing measurement parameters element.

7. A WLAN sensing measurement method, applied to a sensing responder, wherein the method comprises:
receiving a sensing measurement setup request frame during a sensing measurement setup procedure, wherein the sensing measurement setup request frame comprises first indication information, the first indication information comprises a sounding type and/or a processing order of a sensing measurement instance, and the sounding type comprises a trigger frame sounding (TF Sounding) and/or a null data packet announcement sounding (NDPA Sounding).

8. The WLAN sensing measurement method according to claim 7, wherein in a case where the first indication information indicates the sounding type and the processing order, and the sounding type includes the TF Sounding and the NDPA Sounding;
after receiving the sensing measurement setup request frame, the method further comprises:
determining a target sounding type in which the sensing responder participates; and
determining a processing order of the target sounding type.

9. A network device, the network device being a sensing initiator, wherein the network device comprises:
a determining module, configured to determine a sensing measurement setup request frame; wherein the sensing measurement setup request frame comprises first indication information, the first indication information comprises a sounding type and/or a processing order of a sensing measurement instance, the sounding type comprises a trigger frame sounding (TF Sounding) and/or a null data packet announcement sounding (NDPA Sounding); and
a sending module, configured to send the sensing measurement setup request frame during a sensing measurement setup procedure.

10. An electronic device, the electronic device being a sensing responder, wherein the electronic device comprises:
a receiving module, configured to receive a sensing measurement setup request frame during a sensing measurement setup procedure, wherein the sensing measurement setup request frame comprises first indication information, the first indication information comprises a sounding type and/or a processing order of a sensing measurement instance, and the sounding type comprises a trigger frame sounding (TF Sounding) and/or a null data packet announcement sounding (NDPA Sounding).

11. A WLAN sensing measurement apparatus, applied to a sensing initiator, wherein the apparatus comprises:
a request frame determining module, configured to determine a sensing measurement setup request frame; wherein the sensing measurement setup request frame comprises first indication information, the first indication information comprises a sounding type and/or a processing order of a sensing measurement instance, the sounding type comprises a trigger frame sounding (TF Sounding) and/or a null data packet announcement sounding (NDPA Sounding); and
a request frame sending module, configured to send the sensing measurement setup request frame during a sensing measurement setup procedure.

12. A WLAN sensing measurement apparatus, applied to a sensing responder, wherein the apparatus comprises:
a request frame receiving module, configured to receive a sensing measurement setup request frame during a sensing measurement setup procedure, wherein the sensing measurement setup request frame comprises first indication information, the first indication information comprises a sounding type and/or a processing order of a sensing measurement instance, and the sounding type comprises a trigger frame sounding (TF Sounding) and/or a null data packet announcement sounding (NDPA Sounding).

13. An electronic device, comprising a memory, a processor and a computer program stored in the memory and executable on the processor, wherein when the computer program is executed by the processor, the method according to any one of claims 1 to 8 is implemented.

14. A computer-readable storage medium, wherein a computer program is stored on the computer-readable storage medium, and when the computer program is executed by a processor, the method according to any one of claims 1 to 8 is implemented.
